# EUROPEAN PATENT APPLICATION

(11) **EP 2 469 425 A2**
(43) Date of publication of application: **27.06.2012**
(21) Application number: 11177925.2
(22) Date of filing: 18.08.2011
(51) Int. Cl.: G06F 17/30

(54) **Contextual customization of content display on a communication device**

(30) Priority: 21.12.2010 US 425369 P
(71) Applicant: Research In Motion Limited, Waterloo, ON N2L 3W8 (CA)
(72) Inventor: Singh, Jasjit, Redwood City, CA California 94065 (US); Abellera, Suzanne, Palo Alto, CA California 94306 (US)
(74) Representative: Moore, Barry

(57) **Abstract**

The embodiments described herein provide a computing or communication device and method, as well as a framework implementable on the device for presenting content, such as syndicated content received from a content feed or other content distribution platform, or advertising content received from an ad network or mediation service. The methods and devices described herein provide for contextual rendering of content on the communication device, based on context rules defined either at a point of origin for the content, or at the communication device itself. These context rules may be used, together with context information collected at the device, to determine the appearance and availability of various device functions (such as messaging, setting a calendar appointment, and so forth) while the content is being viewed at the communication device, without requiring the originator of the content to develop interactive or rich media files for rendering the content at the communication device.

## Description

This application claims priority to U.S. Provisional Application No. 61/425,369, filed 21 December 2010.

The present disclosure relates generally to context-based presentation of content including advertising content at a mobile device.

Delivery of advertising content to mobile devices such as smartphones, tablets, and other wireless communication devices has become increasingly important to advertisers and publishers alike. Advertising content may be served by advertising networks to mobile devices, for example in response to received requests transmitted from the mobile device to an advertising network, optionally brokered by a mediation service in communication with many advertising networks, which directs the request to an appropriate advertising network server.

To engage the mobile device user, advertising content has been developed to include interactive ("rich media") applications, which can include sophisticated content such as expanding graphics, interactive games, videos, and the like. Development of such interactive content may be resource-intensive for many advertisers. Advertising content for a given request is also sometimes selected based on demographic, historic or contextual information collected at the mediation layer and/or advertising network. This information may be used to customize the selection of a particular advertisement ("ad unit") to be sent to a particular mobile device, but the presentation of the ad unit to the user at the mobile device is generic.

### Brief Description of the Drawings

In drawings which illustrate by way of example only embodiments of the present application,

FIG. 1 is a block diagram of an embodiment of a mobile computing device.

FIG. 2 is a block diagram illustrating components of a host system in one example configuration for use with the mobile device of FIG. 1.

FIG. 3 is a schematic diagram of a possible network topology for the mobile computing device of FIG. 1.

FIG. 4 is a communication diagram illustrating message flow between various components of the network of FIG. 3.

FIG. 5A is a block diagram of components of an ad unit.

FIG. 5B is a block diagram illustrating modules implementable on the device of FIG. 1 for retrieving and displaying ad units.

FIG. 5C is a further communication diagram illustrating message flow between various modules of FIG. 5B.

FIG. 6 is an illustration of an example graphical user interface for an application.

FIGS. 7A to 7D are illustrations of further graphical user interfaces displaying ad units and related components.

FIGS. 8A to 8E are further illustrations of graphical user interfaces displaying ad units and related components.

FIGS. 9A to 9C are still further illustrations of graphical user interfaces displaying syndicated content and related components.

FIG. 10 is a flowchart illustrating a process of displaying content from an ad unit or content feed data at a communication device.

### Detailed Description

The embodiments described herein may provide a computing or communication device and method, as well as a framework implementable on the device for presenting content, such as syndicated content received from a content feed or other content distribution platform, or advertising content received from an ad network or mediation service. The methods and devices described herein provide for contextual rendering of content on the communication device, based on context rules defined either at a point of origin for the content, or at the communication device itself. These context rules may be used, together with context information collected at the device, to determine the appearance and availability of various device functions (such as messaging, setting a calendar appointment, and so forth) while the content is being viewed at the communication device, without requiring the originator of the content to develop interactive or rich media files for rendering the content at the communication device.

These embodiments will be described and illustrated primarily in relation to an advertising network ("ad network") and a mobile wireless communication device, hereafter referred to as a mobile communication device, communication device, or computing device. It will be appreciated by those skilled in the art, however, that this description is not intended to limit the scope of the described embodiments to implementation on these particular systems. For example, the methods and systems described herein may be applied to any appropriate communication device or data processing device adapted to communicate with another communication or data processing device over a fixed or wireless connection, whether portable or wirelessly enabled or not, whether provided with voice communication capabilities or not, and additionally or alternatively adapted to process data and carry out operations on data in response to user commands for any number of purposes, including productivity and entertainment. Thus, the embodiments described herein may be implemented on computing devices including without limitation cellular phones, smartphones, wireless organizers, personal digital assistants, desktop computers, terminals, laptops, tablets, handheld wireless communication devices, notebook computers, entertainment devices such as MP3 or video players, and the like. Unless expressly stated, a computing or communication device may include any such device.

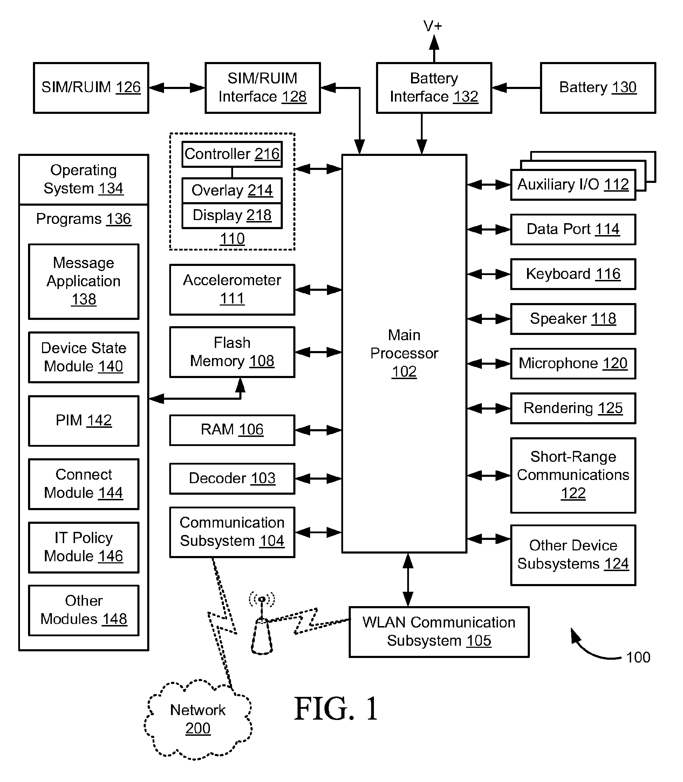

The embodiments described herein for implementation on a computing device may be implemented on a communication device such as that illustrated in FIG. 1. The communication device may communicate with other devices over a wireless communication system. The communication device 100 may be a mobile device with two-way communication and advanced data communication capabilities including the capability to communicate with other mobile devices or computer systems through a network of transceiver stations. The communication device 100 can also have voice communication capabilities. Throughout the specification, terms such as "may" and "can" are used interchangeably and use of any particular term should not be construed as limiting the scope or requiring experimentation to implement the claimed subject matter or embodiments described herein.

FIG. 1 is a block diagram of an example embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this example embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The mobile device 100 may be provided with additional communication subsystems, such as the wireless LAN (WLAN) communication subsystem 105 also shown in FIG. 1. The WLAN communication subsystem may operate in accordance with a known network protocol such as one or more of the 802.11™ family of standards developed by IEEE. The communication subsystem 105 may be separate from, or integrated with, the communication subsystem 104 or with the short-range communications module 122. The main processor 102 also interacts with additional subsystems such as a Random Access Memory (RAM) 106, a flash memory 108, a display 110, other data and memory access interfaces such as an auxiliary input/output (I/O) subsystem 112 or a data port 114, a keyboard 116, a speaker 118, a microphone 120, the short-range communications 122 and other device subsystems 124. The communication device may also be provided with an accelerometer 111, which may be used to detect gravity- or motion-induced forces and their direction. Detection of such forces applied to the device 100 may be processed to determine a response of the device 100, such as an orientation of a graphical user interface displayed on the display assembly 110 in response to a determination of the current orientation of the device 100.

In some embodiments, the user device 100 may comprise a touchscreen-based device, in which the display interface 110 is a touchscreen interface that provides both a display for communicating information and presenting graphical user interfaces, as well as an input subsystem for detecting user input that may be converted to instructions for execution by the device 100. The touchscreen display interface 110 may be the principal user interface provided on the device 100, although in some embodiments, additional buttons, variously shown in the figures or a trackpad, or other input means may be provided. In one embodiment, a transmissive TFT LCD screen 218 is overlaid with a clear touch sensor assembly 214 that supports single and multi-touch actions such as tap, double-tap, tap and hold, tap and drag, scroll, press, flick, and pinch. The touchscreen display interface 110 detects these single and multi-touch actions, for example through the generation of a signal or signals in response to a touch, which may then be processed by the processor 102 or by an additional processor or processors in the device 100 to determine the location of the touch action, whether defined by horizontal and vertical screen position data or other position data. Touch location data may include an area of contact or a single point of contact, such as a point at or near a center of the area of contact. The touchscreen display interface 110 may be provided with separate horizontal and vertical sensors or detectors to assist in identifying the location of a touch. A signal is provided to the controller 216, shown in FIG. 1, in response to detection of a touch. The controller 216 and/or the processor 102 may detect a touch by any suitable contact member on the touch-sensitive display 110.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) or another suitable identity module to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Select other modules 148 may also be included, such as those described below. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system. Some or all of the data items stored at the communication device 100 may be indexed for searching on the device 100 either through a corresponding application, such as the PIM 142, or another suitable module. In addition, the items may be searchable using a unified search process implemented in the device operating system 134. For example, application data items can be encapsulated in a searchable entity class and registered with a unified search engine on the device 100 that executes searches against all registered data repositories on the device based on received queries. The search engine can also be configured to invoke a search process of external resources, such as Internet search engines or remote databases.

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with.

The connect module 144 includes a set of Application Programming Interfaces (APIs) that can be integrated with the communication device 100 to allow the communication device 100 to use any number of services associated with the enterprise system or with other systems accessible over the network 200. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

The communication subsystem component 104 may include a receiver, transmitter, and associated components such as one or more embedded or internal antenna elements, Local Oscillators (LOs), and a processing module such as a Digital Signal Processor (DSP) in communication with the transmitter and receiver. Signals received by an antenna through the wireless network 200 are input to the receiver, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP. In a similar manner, signals to be transmitted are processed, including modulation and encoding, by the DSP, then input to the transmitter for digital-to-analog (D/A) conversion, frequency up conversion, filtering, amplification and transmission over the wireless network 200 via an antenna. The DSP not only processes communication signals, but also provides for receiver and transmitter control, including control of gains applied to communication signals in the receiver and the transmitter. When the communication device 100 is fully operational, the transmitter is typically keyed or turned on only when it is transmitting to the wireless network 200 and is otherwise turned off to conserve resources. Similarly, the receiver is periodically turned off to conserve power until it is needed to receive signals or information (if at all) during designated time periods. Other communication subsystems, such as the WLAN communication subsystem 105 or WPAN communication subsystem 107 shown in FIG. 1, may be provided with similar components as those described above configured for communication over the appropriate frequencies and using the appropriate protocols. The particular design of the communication subsystem 104, 105, 107 is dependent upon the communication network 200 with which the communication device 100 is intended to operate. Thus, it should be understood that the foregoing description serves only as one example.

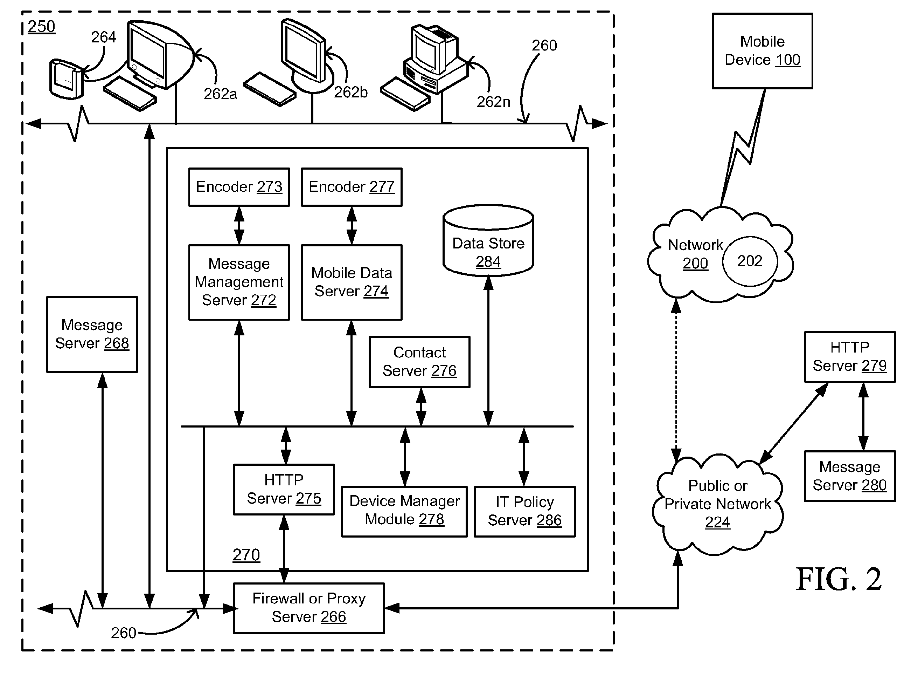

FIG. 2 is a block diagram illustrating components of an example configuration of a host system 250 with which the communication device 100 can communicate in conjunction with the connect module 144. The host system 250 will typically be a corporate enterprise or other local area network (LAN), but can also be a home office computer or some other private system, for example, in variant implementations. In the example shown in FIG. 2, the host system 250 is depicted as a LAN of an organization to which a user of the communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying serial or USB-connected cradle 264 for the user's communication device 100 is situated on a LAN connection. Other user computers 262b-262n are also situated on the network 260. The cradle 264 or other connection facilitates the loading of information (e.g. PIM data, private symmetric encryption keys to facilitate secure communications) from the user computer 262a to the communication device 100, and can be particularly useful for bulk information updates often performed in initializing the communication device 100 for use.

Only a subset of network components of the host system 250 are shown in FIG. 2 for ease of exposition, and it will be understood by persons skilled in the art that the host system 250 will comprise additional components that are not explicitly shown in FIG. 2 for this example configuration. More generally, the host system 250 can represent a smaller part of a larger network (not shown) of the organization, and can comprise different components and/or be arranged in different topologies than that shown in the example embodiment of FIG. 2.

To facilitate the operation of the communication device 100 and the wireless communication of messages and message-related data between the communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 can include an IT Policy editor and an IT user property editor, not shown, as well as other software components for allowing an IT administrator to configure the communication devices 100. The support components 270 also include a data store 284, and an IT policy server 286 in communication with the various components of the host system 250 and the communication devices 100. Those skilled in the art know how to implement these various components. Other components can also be included as is well known to those skilled in the art. Further, in some implementations, the data store 284 can be part of any one of the servers.

In this example embodiment, the communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the communication device 100. The wireless VPN router allows a VPN connection to be established directly through a specific wireless network to the communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the communication device 100 in this alternative implementation.

Messages intended for a user of the communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example. Some example implementations of the message server 268 include a Microsoft Exchange™ server, a Lotus Domino™ server, a Novell Groupwise™ server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. The message management server 272 can be used to specifically provide support for the management of messages, such as e-mail messages, that are to be handled by mobile devices. Generally, while messages are still stored on the message server 268, the message management server 272 can be used to control when, if, and how messages are sent to the communication device 100. The message management server 272 also facilitates the handling of messages composed on the communication device 100, which are sent to the message server 268 for subsequent delivery.

For example, the message management server 272 can monitor the user's "mailbox" or "inbox" (e.g. the message store associated with the user's account on the message server 268) for new e-mail messages, and apply user-definable filters to new messages to determine if and how the messages are relayed to the user's communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the communication device 100 via the shared network infrastructure 224 and the wireless network 200. The message management server 272 can also receive messages composed on the communication device 100 (e.g. encrypted using Triple DES), decrypt and decompress the composed messages, re-format the composed messages if desired so that they will appear to have originated from the user's computer 262a, and re-route the composed messages to the message server 268 for delivery.

The message management server 272 can also be adapted to provide other control functions, such as only pushing certain message information or pre-defined portions (e.g. "blocks") of a message stored on the message server 268 to the communication device 100. For example, in some cases, when a message is initially retrieved by the communication device 100 from the message server 268, the message management server 272 can push only the first part of a message to the communication device 100, with the part being of a pre-defined size (e.g. 2 KB). The user can then request that more of the message be delivered in similar-sized blocks by the message management server 272 to the communication device 100, possibly up to a maximum pre-defined message size. Accordingly, the message management server 272 facilitates better control over the type of data and the amount of data that is communicated to the communication device 100, and can help to minimize potential waste of bandwidth or other resources.

The foregoing description relates generally to e-mail messages, but it will be appreciated by those skilled in the art that the message server 268 may be configured to manage messages of different formats. In addition, the communication device 100 may be provisioned to send and receive messages of different types using the same or a different transport, bypassing the message server 268. Other formats may include, without limiting the scope of such services, e-mail, IM (server-based or peer-to-peer), SMS, MMS, voicemail, and VVM and the like. For example, the user may wish to access at the communication device 100 e-mail messages received by a user account maintained by the user's enterprise system 250, as well as e-mail messages received by an account provided by a third party service provider. The user may also wish to access messages provided by other messaging or analogous services, for example content published by a content provider and pushed to the communication device 100 via a push server in communication with the device 100 over the wireless network. Such content may include updates or postings received from a social networking service, a news feed, or other content feed. Such messages and other content may be received and stored in distinct data stores, folders or files at the device 100, together with messages and content generated at the device 100 for transmission via the associated service. For example, each message or content item received or generated at the device 100 may be stored as a separate message or data object in a data store associated with the service, and may be retrievable for presentation to the user using a dedicated application executing at the device 100 and associated with that particular message or content format.

In addition, the objects may be indexed for searching on the device 100 either through the dedicated application itself or through a unified search process implemented in the device operating system 134, and retrievable for presentation in a "unified inbox" displayable at the device 100. The unified inbox may be defined conceptually or visually to the user as a message inbox having characteristics similar to those employed in respect of mail clients known in the art, but it will be appreciated by those skilled in the art that the "unified inbox", as referred to herein, need not be limited strictly to such an implementation. The unified inbox may also be considered as a global message or content list, or as a unified view of message or other content information that serves as an entry point for access to a service or application executable on the device. When the unified inbox is invoked, message objects and other content may be retrieved by a collector process from one or more data stores or folders available to the device 100 for presentation in a unified inbox display. The message or content elements displayed in the unified inbox display may include, in the case of messages such as e-mail, header data such as sender, timestamp, and subject line. In addition, or alternatively, at least a portion of the message body content may also be displayed. In the case of other message types, such as instant messages, the information displayed may include message body content in place of message header content.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as a File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

A computing device such as the communication device 100 described above, which as noted previously may comprise any one of a number of different types of data processing or communication devices, may be controllable by the user by means of one or more user input systems, such as a user input device or interface, including without limitation the keyboard 116, display 110 where the display is comprised in a touchscreen interface, microphone 120, trackball, buttons, trackpad, scroll wheel, and the like. These user input devices may be external to the computing device itself; for example, a pointing device such as a mouse, trackball, tablet or touchpad may be provided as a peripheral component. In the case of a mobile device such as a smartphone or tablet computer, the user input devices or interfaces are advantageously incorporated into the computing device itself, rather than provided as an external device. These various user input devices and interfaces may be actuated by the user (for example, through the application of touch or pressure) to control the operation of the computing device, for example to navigate through graphical user interfaces, menu structures, and the like, to select and initiate application or operating system commands for execution, and to input data for processing or transmission by the computing device. User input received via the input interfaces or devices may thus be used to control the operation of an application, or to change settings on the computing device.

For example, applications available for execution on the computing device may include messaging applications for use in association with the email, voice mail, SMS and MMS services mentioned above, as well as for use with other network messaging services, including both server-based and peer-to-peer messaging. Other PIM applications may also be provided, and may be integrated with location-based services. User input may thus be used not only to compose messages for transmission from the computing device, but also to initiate transmission, and to retrieve and present messages at the computing device via an output interface (such as via the display 110 or speaker 118). Similarly, user input may be used to compose, save, transmit and retrieve for display calendar-based data objects such as appointments, meeting invitations, tasks, and alarms. Other examples of applications that may be available for execution on the device can include media players for playback of music or sound files, video files, as well as viewers or readers for presentation of text information, such as e-book applications, social feed applications, news readers, and the like.

The data retrieved and rendered for presentation to the user may be stored in local storage at the computing device, for example in flash memory 108. In some cases, the data may be streamed from a remote location, such as a web server or media server accessible over a wireless or fixed network. Other applications on the device, such as browser applications or mapping and geolocation applications, may also retrieve data over a network in response to user commands.

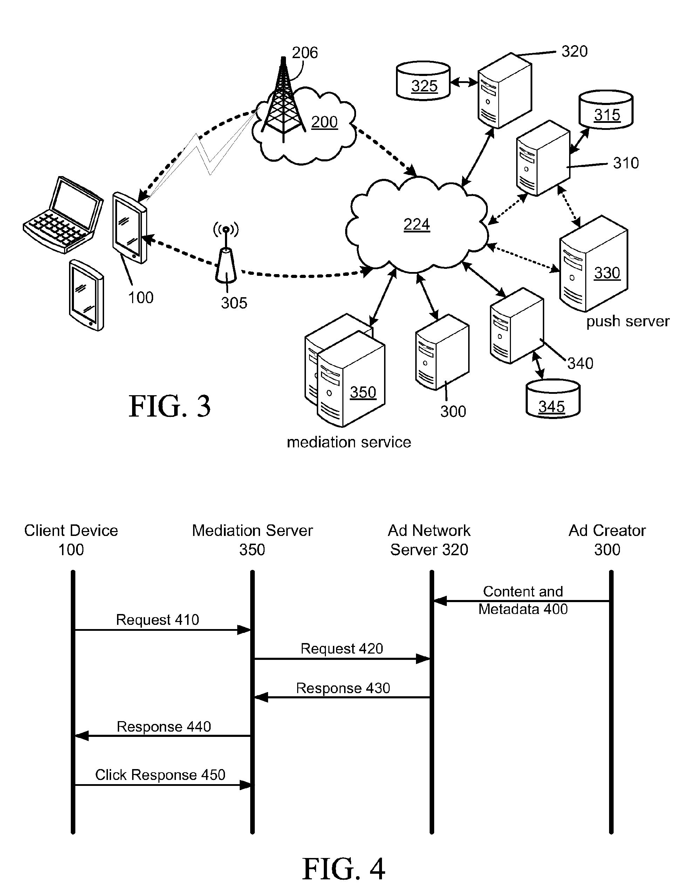

The systems and methods herein will be described generally with reference to an advertising ecosystem reflected by the example network topology of FIG. 3. It will be appreciated from the following description that the network illustrated in FIG. 3 is not exclusively implemented for the purpose of advertisement service and consumption, but may be implemented for the various purposes described in connection with the host system 250 for messaging, transmission of other data, as well as the provision of web services over the shared network infrastructure 224, such as the Internet, to communication devices over the wireless network. For ease of reference, FIG. 3 is illustrated with only select content providers or servers 300, 320, 340, as well as a push service comprising push server 330, and a mediation layer or service provided by mediation servers 350. In FIG. 3, one or several communication devices 100 may communicate with the public network 224 over the wireless network 200 generally as described above. Connectivity may alternatively or additionally be provided to the devices 100 over a LAN or WLAN, here represented by the access point 305. The access point 305 may of course be provided within a LAN, not shown, such as the host system 250 of FIG. 2.

However the communication devices 100 are provided with connectivity, the devices may be served with content from one or more of the content providers represented by servers 300, 310, 320, 340. It will be appreciated that the schematic representations in the figures may omit a number of implementation details that will be known to those skilled in the art; for example, a single content service or web service providing content to a communication device 100 may be implemented across multiple servers. Content may be served directly from these servers 300, 310, 320, 340 (that is to say, without intermediate aggregation or mediation prior to delivery to the device 100), or alternatively, the content may be provided to the device 100 from an intermediary, such as the mediation service 350 or push service 330, or an aggregation service or other content publishing or distribution service, not shown.

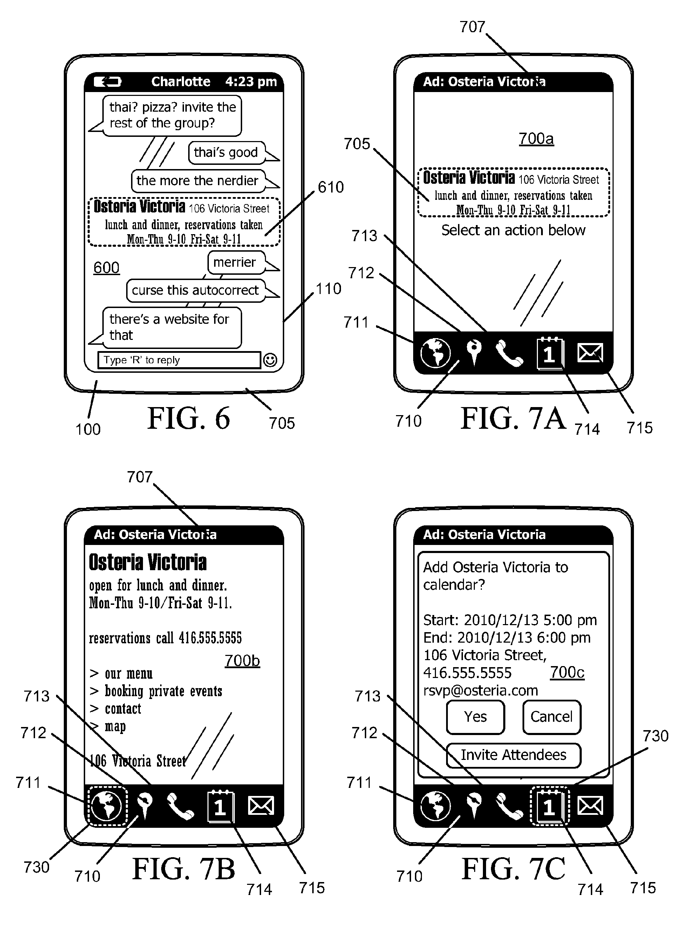

In the example of FIG. 3, the content provided to the communication devices 100 may include advertising content deliverable over the network 224 in units ("ad units"). A single ad unit is an advertisement, or set of advertisements, resulting from a single unit or instance of code. For example, a common form of ad unit used in web advertising and mobile web advertising is the web banner, comprising a graphics file in a commonly accepted file format such as GIF, PNG or JPEG for still images, and animated GIFs for animated images, associated with a uniform resource indicator ("URI"). When provided to the end user device (i.e., the communication device 100) for presentation to the user, the banner graphic may be embedded and displayed in content rendered at the device 100 for example, in a web page in a browser application, or in a designated advertisement area in an application user interface, in a designated region of a home screen user interface, and the like and rendered actuatable so that user action on the graphic (for example, by moving user interface focus to the graphic and applying a user input, such as a "click" or "tap" via a trackpad or touchscreen interface) invokes a client browser application or other application to retrieve additional information from the designated URI. An example of a banner ad unit 610 is shown in FIG. 6, displayed in the middle of an instant messaging user interface 600.

An ad unit may be delivered to the communication device 100 in response to a request issued from or on behalf of the device 100 (i.e., the ad unit is "pulled" to the device). The request may be initiated in response to invocation of a function by the publisher of the service or application in which the advertisement is displayed. For example, in the case of a web page comprising an embedded banner advertisement, the publisher is the provider of the web page. As another example, where an application developed for execution on the device 100 is monetized by the placement of advertising in its user interface, the publisher may be the application developer or distributor. In the example of FIG. 6, the publisher may be the developer of the instant messaging application. Typically, to monetize its published content, the publisher engages an advertising network or a mediation service (described below) to arrange for the serving of ad units to accompany the content.

In FIG. 3, the content provider represented by the first server 300 may be a content creator, such as an advertisement ("ad") creator. The creator provides advertising content over the network 224 that is ultimately deliverable to the communication devices 100 as ad units. While the ad creator may serve the ad unit directly to the communication device 100 in this manner within HTML or other code served to the device 100 for rendering and display, it is common for advertisers to use the services of an advertising network to target and deliver ad units to end user devices 100. In FIG. 3, the content providers 320, 340 represent two such ad network services. Each ad network service maintains an inventory of ad units, as represented by corresponding databases 325, 345. In response to a received request for an ad unit, the ad network service selects and delivers ad unit content, including the original creative component (e.g., the web banner graphic) and typically an associated URI. The URI provided may be the URI defined by the ad creator, although typically the URI will be a customized address defined by the ad network service for the purpose of tracking "click-through" response, or user response (by user actuation of the displayed ad). The ad network may thus track the effectiveness of its advertisements.

The operation of ad network services, the configuration of ad units for delivery to communication devices 100, and the monitoring of user response will be known to those skilled in the art, as well as methods for targeting advertisements for delivery to the communication devices 100. The ad network services 320, 340 may select ad units to serve in response to requests based on contextual, demographic and historic information. For example, the request for an ad unit may be accompanied by metadata originating at the communication device 100 defining a particular target for the advertisement (e.g., an identification of the target communication device 100; an age range and/or salary range of the user of the device 100, if that information is available), as well as contextual information such as the identity of the process executing at the device at the time the request was made (which application initiated the request for the ad unit). Other relevant contextual or historic data may be retrieved or generated at the ad network server, such as time of day, relative click-through response of a given advertiser's ad units, and so forth. One or more of these factors, as well as other contextual, demographic or historic information, may be used to select an appropriate ad unit for delivery to the device 100.

A further layer may be interposed between the ad creator and network, and the communication device 100. A mediation service 350 may operate as a broker between the communication device 100 and one or more ad network services 320, 340; thus, it provides publishers with access to ad units served by multiple ad network services. The publisher may engage the mediation service 350 to mediate requests for ad units and provide the mediation service 350 with relevant information relating to the publisher's content as well as preferences regarding the selection and serving of advertisements. The mediation service 350 then uses this information, as well as additional optional statistics about performance of individual ad network services, to determine where to send requests received from the device 100 for ad units.

The message flow between the various components described above is illustrated in FIG. 4. The ad creator 300 provides its content, the ad unit and optionally additional metadata (discussed below) 400, to the ad network server 320 or 340. The ad network server 320, 340 maintains the ad unit and any accompanying metadata in its own storage 325, 345. At a later point, a client communication device 100 initiates a request for an ad unit 410. As noted above, the request may include metadata. The request 410 is received by the mediation server 350, which then forwards on behalf of the device 100 a new request 420 to a selected ad network server 320, 340. The selection of the ad network server 320, 340, as noted above, may be made according to various statistics and other publisher information provided to the mediation service.

In response to the request 420, the ad network server 320, 340 provides a response 430 comprising an ad unit to the mediation server 350. This ad unit is then forwarded by the mediation server 350 to the device 100 in a further response 440. The ad unit is then rendered for presentation at the communication device 100. Any action on the ad unit by the user (e.g., a click-through response) once the ad unit is presented at the device 100 may then be reported back to the mediation server 350 in a further response 450.

Ad units received at the communication device 100 may be cached in memory (or in a non-volatile store) for later display. Caching one or more ad units ensures a faster response time when a new request for an ad unit is generated at the device 100; it also ensures that an ad unit is still available for display at the device 100 in the event the device 100 moves outside of wireless communication coverage. A number of ad units may be downloaded and cached in advance, and optionally refreshed on a periodic basis with new ad units received via the mediation server 350, or else refreshed once the device 100 detects that it has returned to an area with wireless coverage.

Communications between the various components illustrated in FIG. 4 may be carried out using any suitable protocol or specification. For example, the communication device 100 may use a server-side API defined for the mediation server 350 to transmit its request 410 for an ad unit. Responses to requests may be structured in a suitable format such as XML or JSON.

The web banner mentioned in the foregoing example is a comparatively simple form of ad unit, consisting primarily of a graphic element and a URI. Because of its simplicity, it is easily resizable and repositionable in the context within which it is displayed at the communication device 100, making it a convenient choice for embedding in web pages, applications, and other content. Banner ad units are also comparatively easily developed by an ad creator without significant investment. However, simple ad units of this type are also generic; there is little option for customizing the ad unit for a particular model of communication device 100 or for a particular user's habits, or for changing the ad unit's behaviour when it is displayed to the user.

While the user of the communication device 100 may know from experience that the banner may be actuated to invoke a further action-for example, clicking on a banner ad unit typically launches a browser application and a request for a URI associated with the advertisement-the number of known possible actions to take with the banner is limited to one: that of clicking on the banner. Even if actuating the banner ad unit results in a number of possible further actions (for example, clicking on the banner may initiate the download of a video clip, or a Flash or HTML5-based application), those possible further actions are not apparent to the user unless they are explicitly described within the banner. Further, if the user clicked on the banner expecting to browse a related website, and instead discovered that he or she had inadvertently initiated a download of a large, unwanted file, the net effect of the ad unit may be to annoy rather than persuade the user. Consequently, simple ad units such as banner ads may not adequately engage the user's attention or interest.

A solution to the problem of overly simple, generic ads is the use of more dynamic, content-rich advertisements. Dynamic advertisements may include graphics that expand to fill the device display 110 with a fullscreen interstitial advertisement to display additional information when clicked, or advertisements that include web feeds or other dynamic content pulled by or pushed to the device 100. A dynamic and content-rich advertisement may also be defined to leverage context information to alter its behaviour to further appeal to the user. For example, the advertisement may include code executable to call a location-based services module on the device 100 to determine the user's proximity to a given address associated with the advertiser; if the user is close to the address, then the advertisement may be automatically modified to inform the user of this fact.

In addition, an ad unit may be written to invoke applications on the communication device 100 in response to a user action via an API defined for the device's operating system. Thus, the ad unit may be actuated by the user to invoke a click-to-contacts function, in which a new contact (for the advertised product or service) is saved to the device's contacts or PIM store; a click-to-phone function, which prompts the user to call a predefined phone number; or a click-to-video function, which opens a streaming video feed to display a video to the user, and so on.

Creation of dynamic or content-rich advertisements, however, may be cost-prohibitive for some creators. Moreover, such advertisements, and ad units that call functions and applications designed for a particular operating system or model communication device 100, may not be portable between different device platforms. Accordingly, the cost of ad development would increase, since different versions of a dynamic advertisement would need to be developed for each communication device environment in which the advertisement is to be displayed. Further, ad units that are developed to include such dynamic or rich features may be substantially larger in size than similar ad units without such features. Thus, it may not be possible to hold as many ad units in cache as may be possible with simpler ad unit formats.

In other words, the typical formats of ad units currently delivered to mobile communication devices 100 represent a trade-off between enhanced functionality and cross-platform performance, or between the ability to adequately engage the user's interest with efficiency in ad development and delivery.

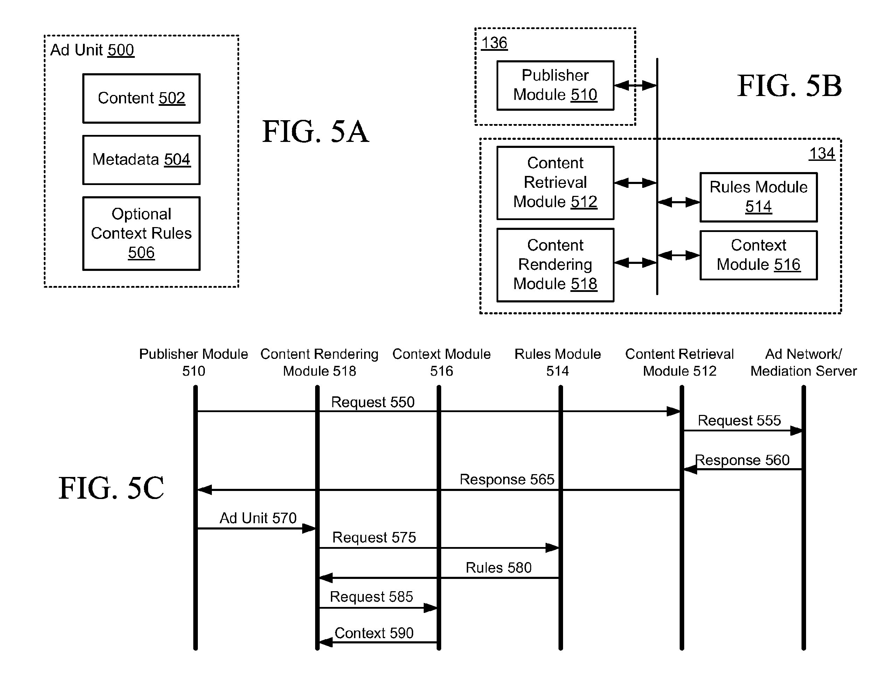

Turning to FIG. 5A, the ad unit 500 may therefore be provided by the ad creator not only with its payload content 502 (i.e., the graphic or other creative element comprising the advertisement), but also with metadata 504 that is optionally more robust than the basic URI provided with simple banner advertisements, as well as optional context rules 506 defined by the ad creator. The metadata 504 and context rule 506 components of the ad unit 500 may be embedded within the same file as the content 502, for example in the form of header information in an XML-based document structure, as tags in a tagged file format, or in a separate file deliverable with the content 502. As one example, for an ad unit 500 comprising a JPEG image as content 502, the metadata 504 and the context rules 506 may be provided in EXIF format, as published by the Japan Electronic Industries Development Association and Camera & Imaging Products Association. The EXIF format, although currently popular for use with digital images, is limited in the number of image file formats it supports, but this format serves as an example for integration of metadata 504 and context rules 506 with the content 502. Another example of standardized representation of metadata with greater support for a variety of file types is Adobe Extensible Metadata Platform (XMP), published by Adobe Systems, Inc.

The content 502, the metadata 504, and the context rules 506 may alternatively be provided as separate files encapsulated for delivery together in an envelope or similar structure. In other embodiments, the ad unit 500 may be provided in a single, proprietary file format of the communication device 100.

The metadata 504 provided with the ad unit 500 may include information pertaining to the ad unit content, or the subject of the advertisement, for extraction and use at the communication device 100 when the ad unit is displayed. For example, the metadata 504 may include a contact email address, contact address and phone number, URI, calendar data for use in defining a new appointment in a calendar application, and/or a brief description of the advertisement subject. If the ad creator is a different entity than the advertiser, additional information relating to the ad creator, specifically, may be included as well. Examples of possible metadata 504 fields and values are illustrated in Table 1 below:

**Table 1**

| **Field Name** | **Example Value** | **Description** |
|---|---|---|
| message | rsvp@osteria.com | contact email address for use in automatically populating new email message |
| browse | http://osteria.com/referrer?va lue=MsT3k | URI associated with ad unit for use with browser application |
| address | '106 Victoria Street' | text string: street address for use with geocoding or calendar applications |
| call | '4165555555' | text or numeric string: contact phone number for use in placing calls |
| share | Zagat-rated Southern Italian comfort food. Bustling, friendly atmosphere. | text string for use with social network applications, messaging |

The foregoing metadata 504 is provided to the device 100 at the time the ad unit 500 is served to the device. However, as will be explained with reference to FIGS. 7A to D, the presentation of the metadata, as well as the presentation of the ad unit itself, may be governed by context rules defined by the ad creator (i.e., the optional context rules 506), or by default or pre-configured context rules implemented and stored at the communication device 100 itself. Context rules define how certain actions in respect of the ad unit 500 and the metadata 504 should be implemented at the device 100, based on the current state or context of the device 100. For example, the metadata set out in Table 1 above relates to a restaurant, and includes a telephone number. As will be seen in greater detail below, the presence of the telephone number in the metadata 504 may result in the display of an action icon for launching a phone application on the device 100 in conjunction with the ad unit 500, so that the user may easily call the restaurant to make a reservation. The address provided in the metadata 504 permits the user to look up the location of the restaurant. A simple context rule is therefore "if it is outside the restaurant opening hours, do not display the action icon for the phone application". Another context rule is "if the user's device is outside the restaurant's immediate neighbourhood, do not display the action item for invoking a map application". The assumption of both these rules is that these modes of contact are less desirable if the restaurant is not open or too far away.

The metadata 504 and the optional context rules 506 may be defined at the time of the ad unit's creation by the ad creator, or at the time the ad unit is provided to the ad network service 320, 340. While the metadata 504 and optional context rules 506 may be provided embedded or in a separate file by the creator to the ad network service, the ad network service may instead provide a user interface for both uploading the content 502 of the ad unit, and entering any metadata 504 and rules 506 without requiring the ad creator to create a special file for delivery to the ad network service. The ad network service may thereafter automatically generate a file for recording the metadata and context rules in association with the content 502. An example of simple metadata that may be generated based on Table 1 is set out below:

```
        <clickAction name = "message" param = "rsvp@osteria.com" />
        <clickAction name = "browse" param =
 "http://osteria.com/referrer?value=MsT3k" />
        <clickAction name = "address" param = "106 Victoria Street" />
        <clickAction name = "call" param = "4165555555" />
        <clickAction name = "share" param = "Zagat-rated Southern Italian comfort food.
 Bustling, friendly atmosphere." />
```

The same metadata, combined with the rules described above, may be represented as follows:

```
        <clickAction name = "message" param = "rsvp@osteria.com" />
        <clickAction name = "browse" param =
 "http://osteria.com/referrer?value=MsT3k" />
        <clickAction name = "contact" param = "106 Victoria Street" />
               <rule name="lat" condition="greater" value= "37.48" />
               <rule name="lat" condition="lesser" value= "40.00" />
               <rule name="lon" condition="greater" value= "-122.23" />
               <rule name="lon" condition="lesser" value= "-120.23" />
        </clickAction>
        <clickAction name = "call" param ="4165555555" />
               <rule name= "time" condition = "greater" value=" 11:30" />
               <rule name= "time" condition= "lesser" value="20:00" />
        </clickAction>
        <clickAction name = "share" param = "Zagat-rated Southern Italian comfort food.
 Bustling, friendly atmosphere." />
```

Here, the various actions that may be invoked using the provided metadata are defined as "clickActions", and provided with parameter values corresponding to the values of Table 1. Two actions, "call" and "contact", are also defined as including context rules ("rule"). In this example, any rules defined for a given action must be true, or else the action is not made available. Thus, the conditions that the current time must be greater than (later than) 11:30 am, and the current time must be less than (earlier than) 10:00 pm must be true for the "clickAction" named "call" to be available.

The ad unit 500, together with its metadata 504 and optional context rules 506, is provided to the communication device 100 together with the content 502. To interpret and apply the metadata 504 and rules 506, the device 100 is provided with a number of modules, schematically illustrated in FIG. 5B. The device 100 is provided with a publisher module or application 510. Referring to the examples discussed above, the publisher module 510 may be the client browsing application capable of displaying a banner or other type of ad unit served to it for display with other web content. The publisher module 510 may instead be an application developed for the runtime environment of the communication device 100, configured to receive and display ad units within its user interface. The publisher module 510 may be any other type of application or module executable on the device 100 for rendering content for display to the user, together with ad units or other syndicated content, discussed below.

Additional modules are provided as part of the operating system 134 of the device 100. In FIG. 5B, the operating system 134 includes a content retrieval module 512, a rules module 514, a context module 516, and a content rendering module 518, the functions of which are described with reference to FIG. 5B. In other embodiments, the content retrieval module 512, rules module 514, and content rendering module 518 may be provided as a separate application providing services to other applications (such as the publisher module 510) on the device, rather than as processes native to the operating system 134. The context module 516 may still be provided as part of the operating system 134, or alternatively as a further application providing services to other applications on the device 100.

The content retrieval module 512 receives requests from applications that it supports, such as the publisher module 510, for content such as ad units. The content retrieval module 512 also manages requests for ad units to be sent to ad network services or mediation services. The rules module 514 manages and interprets context rules that are received with ad units 500. In addition, the rules module 514 manages default context rules defined at the communication device 100, for use with ad units 500 received at the device 100 that do not have their own associated context rules. Optionally, the rules module 514 may also provide for user or administrator changes to the default context rules, or for creation, editing and deletion of new rules in addition to the default context rules.

The context module 516 collects or detects context information concerning the operation of the device 100, such as its current sound/alert profile (for example, if the device 100 is a smartphone, whether the ringer is in silent or vibrate mode), battery status, currently available wireless connections, and so forth; locational and environmental information, such as the current geographic location, the time of day, whether the device is registered at its home network or roaming, and weather forecast; or social network-related information, such as the user's current schedule as represented by a calendar or PIM store on the device 100, or whether any of the user's "friends" (as they are typically defined or declared by various social networking applications) are online or in the vicinity, as may be determined from a presence service in communication with the device 100.

The context information collected or detected by the context module 516 may be aggregated and updated periodically on an ongoing basis, or only in response to express requests issued by another module of the device 100. The context module 516 may comprise separate detection modules (such as a GPS or other locational technology module), or may simply operate as an aggregator of context data obtained from other modules operating on the device or in communication with the device.

A content rendering module 518 is provided for rendering ad units 500 received in response to requests initiated by the publisher module 510. The rendering module 518 may provide rendering functions for other applications and utilities on the device 100 (for example, it may comprise the rendering engine 125), but the rendering module 518 in particular renders the ad unit for display in view of any applicable rules or context information obtained from the rules module 514 and context module 516, respectively.

Information flow between these various modules is illustrated in FIG. 5C. The publisher module 510 initiates a request for an ad unit 550, which is provided to the content retrieval module 512 on the device. The content retrieval module 512 initiates a request 555 to the ad network server 320, 340 or to the mediation server 350, as described above. In response 560, the content retrieval module 512 receives an ad unit 500 with its content 502, metadata 504, and optional context rules 506. A response 565 comprising the ad unit 500 is returned to the publisher module 510, which then provides the ad unit 570 for rendering by the content rendering module 518 (although in some embodiments, the ad unit 500 may be provided directly to the content rendering module 518 by the content retrieval module 512).

The content rendering module 518 must then determine what context rules are to apply to the rendering of the ad unit 500, and requires context information to apply the rules. If the ad unit 500 received includes context rules 506, then the content rendering module 518 need not query the rules module 514 for context rules to when displaying the ad unit. Typically, if the ad creator has provided his or her own context rules 506, then none of the default or preconfigured rules stored at the communication device 100 is applied; rather, the rules selected by the ad creator override any default or preconfigured rules at the device 100. In select embodiments, however, non-conflicting rules stored at the device 100 may still be applied along with the context rules 506 supplied with the ad unit 500. Thus, in those select embodiments, and when the ad unit 500 is not provided with any context rules 506, the content rendering module 518 queries 575 the rules module 514 for the default and/or preconfigured rules for the ad unit 500, and receives a response 580 from the rules module 514 comprising the stored rules to be applied to the ad unit 500.

The context rules stored at the device 100 may be numerous, and it is possible that not every context rule will be applicable to a given ad unit. For example, if the metadata 504 provided with the ad unit 500 omitted a telephone number, a context rule defining whether or not an action icon for placing a phone call should be displayed in association with the ad unit is irrelevant. Thus, the context rules stored at the device 100 may be categorized or tagged according to metadata type (e.g., "call" for phone numbers, "browse" for URIs, "share" for social networking or messaging options, etc.). When the content rendering module 518 receives the ad unit metadata 504, the module 518 determines which types of metadata 504 are included, and then queries the rules module 514 only for rules corresponding to those types.

To implement the context rules, the content rendering module 518 also requires context information. Thus, at 585 the module 518 queries the context module 516 for the relevant context information. Again, since diverse types of context information may be detected or collected by the context module 516, the query 585 may identify specifically those types of context information (such as "time", "lat", and "Ion") that are relevant to the rules to be applied. A response is received from the context module 518 at 590. With the context information, the rules, and the ad unit with its metadata 504, the content rendering module 518 may then render the ad unit 500 for display on the device 100 in accordance with the relevant context rules.

The display of the ad unit 500 in accordance with the context rules will be explained with reference to FIGS. 6 and 7A to 7D. FIG. 6 illustrates a user interface for an instant messaging application 600 displayed on the display 110 of a wireless communication device 100, with a banner ad unit 610 displayed in the middle of the interface. This banner ad unit 610 may have been delivered to the communication device 100 generally as described above, then displayed with other content (in the example of FIG. 6, instant messages) by the publisher module 510 (in the example of FIG 6, the instant messaging application 600). The ad unit may be actuated by a user-i.e., selected using a user interface input device (via a touchscreen, optical joystick, trackpad, or the like), which places the ad unit in focus and initiates a command to execute an action associated with the ad unit.

When the banner ad 610 is actuated, rather than invoke a separate application such as a browser application for retrieving a webpage associated with the ad unit for display, the display 110 of the device can instead transition instead to an overlay display such as 700a, shown in FIG. 7A. The overlay display 700a is invoked by the content rendering module 518 in response to a request initiated by actuation of the ad unit 610. This overlay display 700a can obscure most, if not all, of the previously displayed user interface 600. In some embodiments, the overlay display 700a may be slightly transparent, thus permitting some detail from the original user interface 600 to be displayed. In this example, the banner ad unit 705 is still visible in a middle portion of the overlay display 700a. A title bar 707 includes a title of the ad unit 705. The title may be included in the metadata served with the ad unit.

The overlay display 700a includes a panel or slider 710 bearing one or more icons representative of actions that may be taken in respect of the ad unit 705. In the figures, the panel is displayed across the bottom of the display 110, but the orientation of the panel 710 may be altered according to the configuration of the device 100 and any display themes active on the device 100. The actions appearing in the panel 710 are determined by the context rules, as well as the metadata supplied with the ad unit. Indeed, the metadata and context rules may also be used to determine the appearance of the panel and its icons, as described below.

In FIG. 7A, five icons representing five actions are shown in the panel 710: a browser application icon 711, which may be invoked to launch the browser application, and to retrieve the webpage or other resource identified by an URI supplied in the ad unit's metadata; a map icon 712, which may be invoked to launch a mapping application, for example to map an address for the ad unit, again supplied with the metadata; a phone icon 713 which may be actuated to invoke a phone application as discussed above, and to optionally automatically dial a predetermined number provided with the metadata; a calendar icon 714 for launching a calendar or PIM application on the device, and for creating a new appointment, which may be populated with information from the ad unit's metadata (for example, the associated address, optionally a start time and duration, and so forth); and an envelope icon that may be actuated to invoke a messaging application, such as an email application, and for creating a new message to be sent, which may be populated with information from the ad units metadata (such as the contact email address, and optionally content such as the "share" content described above).

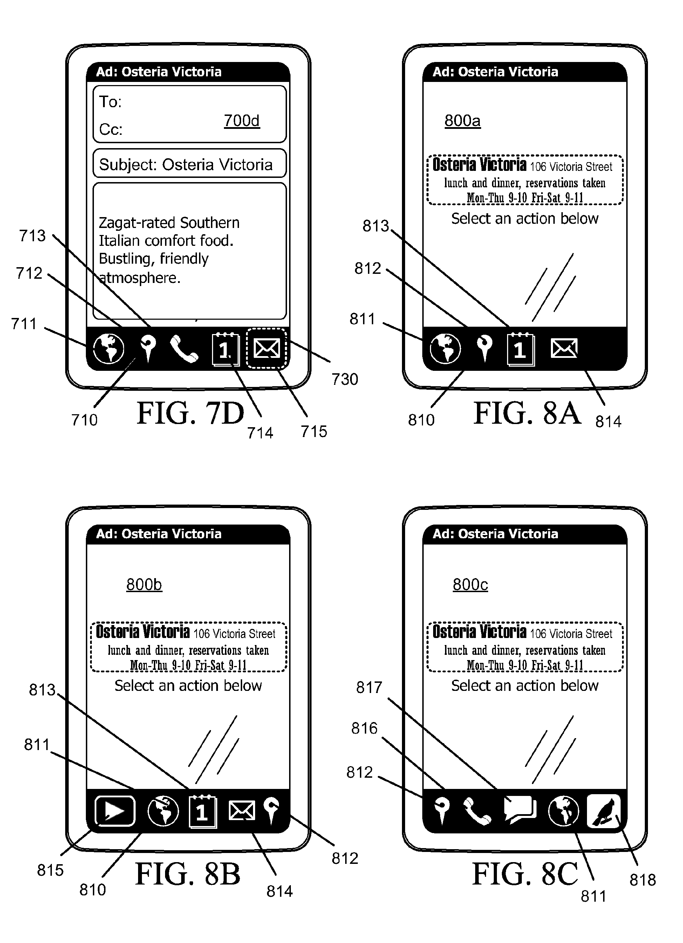

Actuating one of the icons shown in the panel 710 invokes that corresponding action. Turning to FIG. 7B, the browser icon 711 is actuated, as indicated by the focus box 730. The user interface 700b now displays a webpage. In this user interface, the webpage is still framed by the same title bar 707 and panel 710, thus providing continuity to the user, and reminding the user that he or she is currently viewing advertising content. If the calendar icon 714 were actuated, as shown in FIG. 7C, the calendar application on the device 100 may be automatically invoked, and a new appointment created and pre-populated with information taken from the ad unit's metadata, as shown in the user interface 700c. FIG. 7D shows yet a further example of a user interface 700d when a third icon, the email or messaging icon 715, is actuated. Here, a new email is displayed for editing, pre-populated with a subject line and content for addressing and transmission to a recipient.

Thus, the content rendering module 518 is capable of rendering the ad unit and its associated content, a substantial part of which is taken from the metadata supplied with the ad unit, in association with icons for taking specific actions in respect of the advertisement. The actions involve the invocation of other applications or operating system functions already resident on the device, such as the email or messaging application, calendar application, phone application, browser application, and the like. While these and other applications and functions are normally available to be accessed on the communication device 100 (for example, by expressly invoking a command to launch one of these applications or functions from a home screen on the device 100), while the ad unit is being displayed, graphical user interface access is provided only for a subset of all the available device applications and functions that are relevant to the metadata provided with the ad unit, and the context rules applied in rendering the ad unit in the overlay display 700a. In this manner, the content of the overlay display 700a is customized according to the user's environment (the capabilities of the communication device 100 and the current context information available at the device) and functions and applications relevant to the content of the ad unit are emphasized.

The panel 710 displayed in FIGS. 7A to 7D may be generated and displayed in the graphical user interface 700a..d in response to an operating system function or API call initiated by the content rendering module 518. It was not necessary for the ad unit itself to be programmed as an interactive advertisement; the content rendering module 518 can provide interactivity by parsing the ad unit's metadata to determine what device functions should be made available to the user when the overlay display is drawn on the device display 110.

FIGS. 8A to 8C illustrate the customizability of the overlay display in response to context information and context rules applied at the device 100 by the content rendering module 518. Additional context rules may have been defined either by the ad creator, or at the device 100 itself. For example, a first rule that may result in the user interface 800a and panel 810 shown in FIG. 8A is "if the communication device is in silent mode (i.e., no ringing or vibration when an incoming phone call is detected), do not display an option to place a phone call"; in FIG. 8A, while a browser icon 811, map icon 812, calendar icon 813 and messaging icon 814 is sown in the panel 810, no phone icon is shown.

The reasoning of this context rule, which may have been defined by the ad creator, but may have already been defined at the communication device 100, is that if the user is reluctant to hear ringing or vibration, the user is unlikely to want to initiate a telephone call. Thus, the rule may be expressed for the ad unit as follows:

```
        <clickAction name = "call" param ="4165555555" order= "0" />
               <rule name= "profile" condition = "silent" />
        </clickAction>
        <clickAction name = "call" param ="4165555555" order= "3" />
               <rule name= "profile" condition = "ring", "custom", "vibrate" />
        </clickAction>
```

In other words, for the action "call" (invoke the phone application), if the context information indicates that the communication device's current profile is "silent", do not display an icon for placing a telephone call (order= "0"). However, the additional rule provides that if the profile is another value (ring, custom, or vibrate), then the call icon should still be displayed in the order defined by "3".

Another example of a context rule illustrated in the user interface 800b of FIG. 8B may be "if it is after the restaurant's opening hours and there is a strong wireless connection, display an option to stream video content from the advertiser". This comprises two conditions for the click action "video", as follows:

```
        <clickAction name = "video" param = "rtsp://192.168.1.102:554/movie.mp4" />
               <rule name= "time" condition = "greater" value=" 11:30" />
               <rule name= "time" condition= "lesser" value="20:00" />
               <rule name= "radio" value="80%" />
        </clickAction>
```

For the content rendering module 518 to display an icon to invoke streaming video (such as icon 815 in FIG. 8B), all three conditions above (two concerning the time the restaurant is open, and the third concerning the strength of the signal detected at the communication device 100) must be determined by the content rendering module 518 to be true.

The remaining icons 811, 812, 813, 814 in the panel 810 of FIG. 8B are shown in a different order than in FIG. 8A. The metadata defining the various actions may also define an order or appearance within the panel 810 by defining an "order" value for one or more of the actions defined in the metadata, as given in the "call" example above. An "order" value of zero may indicate that the icon corresponding to an action is not to be displayed at all, whereas a whole number value comprises an assignment of order or priority to the possible action icons.

The metadata may also define colour of the icons when the icons are in focus and out of focus. for example:

```
        <clickAction name = "message" param = "rsvp@osteria.com" order= "1" focus-
 color= "LIGHTGRAY" unfocus-color="BLACK" />
```

In this example, when the icon for the messaging application ("message") gains focus in the user interface because the user hovered or selected the icon, it is displayed with a light grey colour scheme, but when focus is moved away from the icon, it is displayed in black.

Further, additional rules may cause other icons for different services to be displayed in the panel 810. In FIG. 8C, it can be seen that three new icons, a phone icon 816, an instant messaging icon 817, and a social networking icon 818, are also shown in the user interface 800c. The appearance of the phone icon may be the result of the condition of the aforementioned rule of FIG. 8A being met (i.e., it is currently during the restaurant's business hours). The inclusion of additional icons, such as the instant messaging icon 817, may be invoked due to other contextual conditions. For example, the context module 516 may determine from information received from a presence service that one or more of the device user's friends are within a predetermined distance, meaning it is more likely that the user may wish to contact these friends to join him or her for a meal. A corresponding context rule may be expressed as follows:

```
        <clickAction name = "share" param = "meet me @osteria 106 Victoria" />
               <rule name= "presence" condition = "friends" value=" 1" />
        </clickAction>
```

Thus, if contextual "presence" information indicates a positive outcome for the condition "friends" (e.g., "are there any friends available and nearby?), then the icon corresponding to the "share" action will be displayed. The metadata may include a parameter with predefined content ("meet me @osteria 106 Victoria") to automatically populate the instant message when the instant messaging icon 817 is actuated and the instant messaging program is launched.

Rules may also be implemented to highlight one or more actions or services over other available options based on a determined response rate for that particular action. For example, if the ad creator is aware that "click to call" has a higher clickthrough rate (response) or that telephone inquiries have a better conversion rate than other types of contact, it is desirable to emphasize the call icon over others, while still displaying all other possible icons. In the metadata, an additional parameter may be defined for highlighting that particular icon, or automatically placing user interface focus on that icon. For example, if the action is defined as a featured action:

```
        <clickAction name = "call" param = "4165555555" property= "featured" />
                                                or
        <clickAction name = "call" param = "4165555555" property= "highlighted" />
```

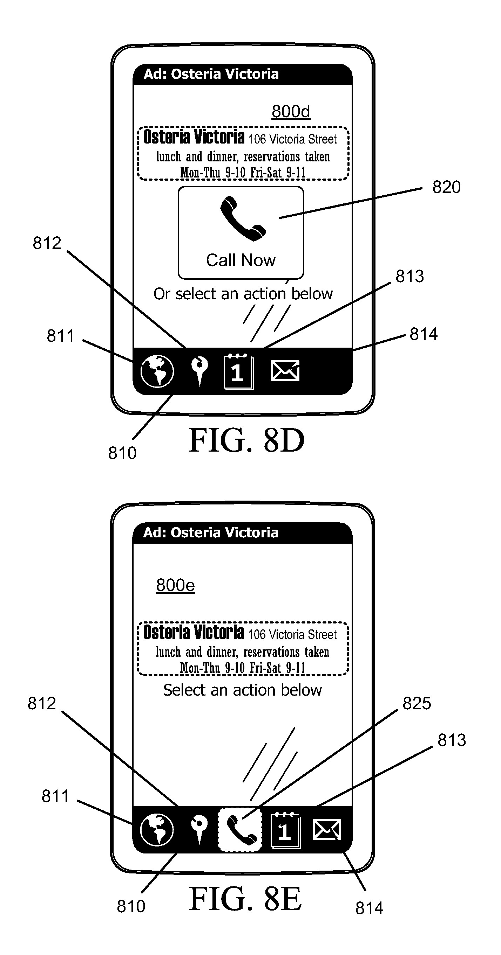

The icon for that option may be displayed in a designated area more likely to be viewed by the user, such as in the user interface displayed in FIG. 8D, where the call icon 820 is enlarged and positioned in the center of the display 110, while other options 811, 812, 813, 814 are still displayed in the panel 810, but not as prominently.

Alternatively, the icon could be highlighted within the panel 810, as shown in the user interface 8003 displayed in FIG. 8E. Although the call icon 825 is still positioned in the panel 810, it is visually distinguished from the others with highlighting. Emphasizing an icon associated with an action with a greater clickthrough or capture rate will likely provide the advertiser with a greater return on its advertisements, and benefit a publisher (i.e., the provider of the publishing module on the device 100) who is compensated for clickthrough responses.

Many context rules, such as the above "share" rule to determine whether the social networking icon should be displayed, may be implemented either by the ad creator (i.e., at the ad network service layer), or may be preconfigured at the device 100, since the context rule is not defined with reference to any information inherent in an ad unit. In some cases, context rules that depend on ad unit metadata parameters (such as determining whether the user is near the restaurant, which requires the restaurant's address) could be provided to the device 100 by the ad network or mediation service. Advantageously, however, context rules are defined by the ad creator or at the device 100 to minimize overhead at the ad network or mediation service in processing the ad units for delivery to a particular device 100. Regardless, it will be appreciated that the ad creator need not provide any data beyond the metadata described above, as well as optional context rules, in order to be able to have the ad unit presented to the user in association with multiple options. Unlike previous interactive ad units, the interactivity is supplied by the content rendering module 518; thus, the ad unit need only be transmitted to the communication device 100 with a fairly small payload of metadata and rules.

The context information applied in the above examples is generally derived from external factors (such as the location of the device 100, or time of day) or device configuration factors (such as which social networking applications are installed and registered on the device 100). Other context rules use historic or statistical information, advantageously to improve capture rates for the advertisement. As noted above, a particular icon may be featured or highlighted based on a known higher clickthrough rate or conversion rate. The statistical information from which the rates are computed is generally aggregate information based on a large sample of user responses. However, the individual user of a device 100 may prefer a different mode of communication over others that are expected to have a better response rate.

The context module 516 may therefore record capture rate information, i.e., the individual user's response to ad units displayed on the device 100 such as the rates at which different types of icons 811..818 are actuated at the device, or additionally or alternatively the rates at which the actions associated with those icons 811..818 are completed (e.g., a phone call is connected, a webpage is fully loaded in the browser application, a calendar appointment is saved). The context module 516 may maintain this information in a data store of the device 100, or alternatively the information may be stored in association with the device 100 in the host system 250. Alternatively, when clickthrough information is received by the mediation service 350 from the communication device 100, that information may be stored in association with that particular device 100 by the mediation service 350. Either remote store may thereafter provide the context information on request to the device 100 when an ad unit is delivered to the device 100.

Thus, this capture rate information may be provided to the content rendering module 518 when an ad unit overlay is to be displayed at the communication device 100, and a particular icon can be featured or highlighted based on this context information. The context rule applying this capture rate information may be one of the default or preconfigured rules stored by the rules module 514. Alternatively, the content rendering module 518 can be configured to automatically apply this capture rate information whenever an ad unit overlay is displayed, even if no express context rule to feature or highlight a particular icon is provided with the ad unit or in the preconfigured rules stored at the device 100. Automatic selection of a featured or highlighted icon in this manner may create efficiencies in the operation of the device, as the user may not take as long to identify and actuate a preferred action, thus potentially reducing the amount of time the screen is actuated and drawing power from a battery power source.

The capture rate information may also be used to de-emphasize certain icons or actions. For example, a rule may provide that the lowest-ranked icon or action is automatically suppressed from display in the ad unit overlay or displayed in the least prominent position unless there is an express rule provided with the ad unit forcing the icon to have a particular position in the panel.

Context rules are generally defined manually. However, in some embodiments, the communication device 100 may be configured with an inference engine for adapting its default context rules based on inferences drawn from user actions detected at the device 100. For example, the context module 516 may detect and store other capture rate information, such as the rates at which icons in different positions in the panel 810 are actuated. It may be discernible, for example, over a large number of ad units displayed on the device having icons 811..818 displayed in different orders and arrangements that the user is most responsive (i.e. most frequently actuates) the icon in the rightmost position, regardless which icon is in that position. While users would presumably select the icon most relevant to their interests, it is possible that a user may consistently (perhaps accidentally) actuate the icon in a position that he or she finds to be the most physically accessible. Accordingly, the context module 516 may infer that position is the "featured" or "highlighted" position, and the rules module 514 or content rendering module 518 may be configured accordingly to position icons identified as "featured" or "highlighted" in that position. The position may of course change according to the evolving habits of the device user. If multiple users use the same communication device 100, the context information stored by the context module 516 may be stored separately for each individual user.

Automatic placement of a featured or highlighted icon in this manner, again, may create efficiencies in the operation of the device since the user may more quickly locate and invoke a desired action; moreover, if the user's habit of actuating an icon in that featured position is the result of accident or habit, placing the featured icon in that location may reduce the incidence of unintended actuation of an unpreferred icon, which could result in increased overhead at the device 100. For example, if the user intended to actuate a phone call icon but accidentally actuated a download icon, the use would wind up downloading data that he or she did not intend to download, thus consuming bandwidth and the user's data allowance with its data service provider.

As another example, if it is determined by the context module 516 that the user seldom actuates icons for downloading or streaming video content, the rules module may be configured to define a new rule either removing the display of the corresponding icons, or else moving the position of a video icon to a less prominent position in the panel 810.

The context module 516 need not include an inference engine, nor is it necessary for an inference engine to be provided on the communication device 100. An inference engine may be implemented on a remote server (not shown in FIG. 3). Data collected by the context module 516, or indeed by other servers in communication with the communication device 100 (such as the mediation service 350 or another server handling data requests, such as HTTP requests on behalf of the device 100) may be transmitted to the remote server for processing on an ongoing basis. The remote server may then develop inferences for user behaviour associated with the device 100 over a period of time. When a change in user behaviour is detected, the remote server may then provide updated content to the device 100. This updated content may be in the form of context data for storage by the context module 516, or alternatively in the form of context rules for storage by the rules module 514. This updated content may be provided in an XML or JSON object for integration with data already stored at the device. To maintain currency of the information at the communication device 100, the remote server may push the updated object to the device 100 (for example, using a push infrastructure such as the push server 330), or else store the updated object in response to a request by the device 100. If the updated object is provided only in response to a device request, then advantageously the device 100 is configured to periodically request updates from the remote server.

From the foregoing description, it can be seen that an enhanced user experience with the ad unit can be provided without unduly increasing the file size of the ad unit, restricting the ad unit to deployment on a single platform, or by requiring a substantial amount of resources to create an interactive or rich media application. At a minimum, the ad creator need only provide some metadata for extraction and presentation by the content rendering module 518 at the end user device 100. Optionally, the creator may also provide context rules, or else rely on default rules implemented at the user device. These context rules are interpreted and applied at the communication device 100 to customize the appearance or presentation of the ad unit based on the context information gathered by the device 100. Unlike prior art solutions that use context information to determine which ad unit to serve to the user's communication device 100, context information is used in these embodiments to increase the likelihood that the user will engage with the ad unit by displaying icons for actions that are contextually relevant to the user at the time the ad unit is displayed.

Ad units such as those described in the above embodiments represent a special case of syndicated content. Individual ad units are typically distributed by ad network services 320, 330 for consumption by several services, including the mediation service 350, content distribution services such as websites, and individual publisher modules 510. Similarly, other syndicated content ranging from commercial information such as manufacturer product descriptions and product reviews to news reports to casual user-generated content published in blogs and Internet fora are packaged in feeds (e.g., RSS or Atom format) and distributed by content providers for collection by aggregators and republication by other services. Although these other forms of syndicated content may not be put to the same end use as an advertisement, the presentation of syndicated content often lacks the interactivity of rich media applications to engage the user, because the syndicated content, like simple advertisements, is packaged to be usable across a variety of platforms.

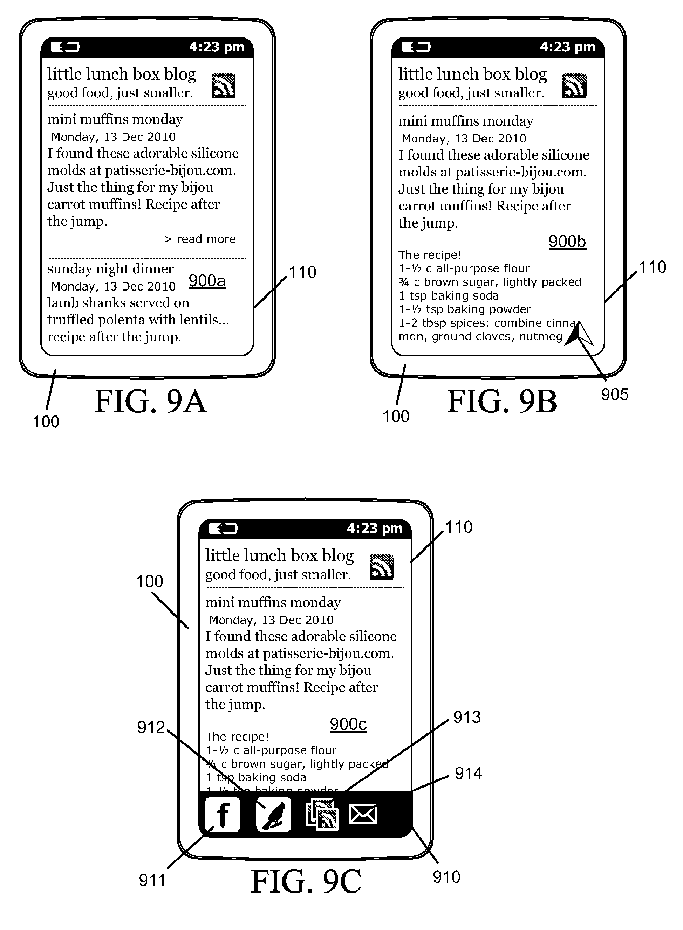

However, the foregoing embodiments may be leveraged to enhance user experience. FIGS. 9A to 9C illustrate an example of syndicated content published in a blog format and feed, displayable on the display 110 of a communication device 100. The application rendering the content on the device 100 may be the content rendering module 518, or alternatively an application, such as the publisher module 510, calling the content rendering module 518 to render the content for display.

In a first view, the user interface 900a of FIG. 9A illustrates a series of entries, as they may typically be displayed in a browser or feed reader executing on the device 100. FIG. 9B illustrates a user interface 900b displaying a single feed entry. The single entry may be configured to include metadata defining the subject of the entry or related items, as well as other meta information such as author name, date and time of publication, and forth:

**Table 2**

| **Field Name** | **Example Value** | **Description** |
|---|---|---|
| title | "mini muffins monday" | title of entry |
| browse | http://patisserie-bijou.com | URI associated with entry for use with browser application |
| share | http://littlelunch.blog.com | URI associated with entry for use with social network applications |
| news | http://littlelunch.blog.com/rs s2.xml | URI associated with news feed for subscriptions |

Accordingly, an abbreviated RSS feed for this entry may appear as follows:

```
        <channel>
        <title>little lunch box blog</title>
        <description>good food, just smaller.</description>
        <items>
               <title>mini muffins monday</title>
               <browse> http://patisserie-bijou.com</browse>
               <share> http://littlelunch.blog.com </share>
               <news> http://patisserie-bijou.com</news>
               <description> http://littlelunch.blog.com/rss2.xml </description>
               <pubDate>Mon, 13 Sep 2010 10:45:00 +0000 </pubDate>
               <description>mini carrot muffins.</description>
       <item>
 </channel>
```

In the case of syndicated content distributed in this manner, it is less likely that context rules will be added to the original feed; rather, the communication device 100 would rely on its own default or preconfigured context rules to customize the presentation of the content.

Returning to FIG. 9B, upon determination that the received content includes suitable metadata, a user interface element such as arrow 905 may be displayed, thus indicating to the user that additional functions are available on the device. In response to actuation of this user interface element 905, the slider bar or panel 910 may be displayed, as shown in FIG. 9C. The panel 910 in this example includes four icons: two icons for social networking applications 911, 912, an icon for a feed aggregator 914, and an icon for launching a messaging application 914. Thus, in response to the minimal additional metadata inserted in the RSS content, the content rendering module 518 or other application rendering the syndicated content on the device 100 may provide the user with additional options for handling the content: for example, actuating one of the social networking application icons invokes the launch of the corresponding application, and pre-populates a web form element with the "share" content identified in the metadata.

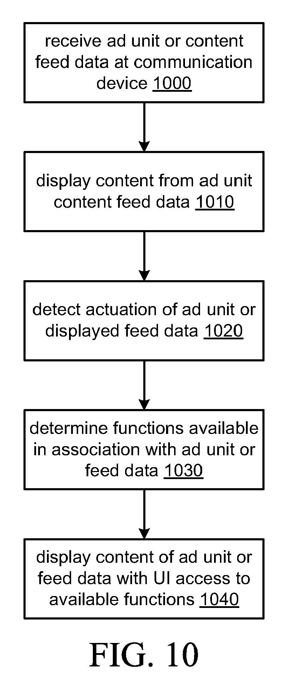

The foregoing embodiments are summarized in the flowchart of FIG. 10. As shown in FIG. 10, at 1000 an ad unit or content feed data (such as a syndicated content feed file) is received at the communication device 100. At 1010, content from the received ad unit or the content feed data is displayed at the communication device. Actuation of the displayed content of the ad unit or content feed data is detected at 1020, and in response to that actuation, the availability of one or more functions in association with the ad unit or content feed data is determined at 1030.

This determination, as discussed above, is carried out with reference to communication device context information that can be detected at the device (such as time of date, geographic location, user profiles etc.), although some of this context information could be determined remotely (by a presence, geolocation or other service in communication with the communication device 100 over a network) and provided to the com device 100. The determination is also carried out with reference to context rules that are delivered either with metadata associated with the ad unit or content feed data, or else with reference to context rules already stored at the communication device 100. This determination may also establish which communication device functions are preferred over others that may be available. While there may be a number of communication device functions that are accessible at the device 100, only a subset may be available in association with the ad unit or content feed data-that is to say, only a subset of communication device functions can be invoked in association with metadata provided with the ad unit or content feed data, because the provided metadata is relevant only to select communication device functions.

Finally, at 1040, the content of the ad unit or content feed data (which may be the same content as previously displayed, or additional content) is displayed at the communication device 100 together with user interface access to the functions that were determined to be available. This user interface access can be provided by means of graphical user interface elements that are displayed onscreen together with the displayed content; alternatively, if access to these communication device functions is available through other user input devices (such as convenience keys or other softkeys, dedicated buttons, or keyboard keys associated with various functions), only those buttons, keys or other devices associated with the determined communication device functions may be enabled while the content is displayed at 1040.

Thus, there is provided in the above-described embodiments a method of providing graphical user interface access to communication device functions, the method comprising: displaying content of an ad unit received at a communication device in a first display screen associated with a first application executing on the communication device, the ad unit comprising the content and associated metadata; and in response to actuation of the ad unit at the communication device, determining a plurality of communication device functions available in association with the ad unit, the plurality of communication device functions being determined by the associated metadata of the ad unit and communication device context information, and displaying the content of the ad unit in a further display screen comprising graphical user interface elements corresponding to the plurality of communication device functions thus determined.

In one aspect, determining the plurality of communication device functions comprises determining that a communication device function is available if corresponding metadata for said communication device function is comprised in the ad unit.

In another aspect, determining the plurality of communication device functions comprises applying one or more context rules to the communication device context information, each of the one or more context rules defining an availability of a communication device function dependent on the communication device context information.

In still another aspect, the method further comprises retrieving the communication device context information in response to the actuation of the ad unit.

In a further aspect, displaying the content of the ad unit in the further display screen comprises displaying the graphical user interface elements in an order determined by the associated metadata.

In still a further embodiment, displaying the content of the ad unit in the further display screen comprises visually distinguishing one of the graphical user interface elements in the further display screen dependent on capture rate information for said graphical user interface element.

There is also provided a computer-readable medium, which may or may not be non-transitory or physical, and which may be provided in a computer program product, bearing or storing code which, when executed by one or more processors in an appropriate electronic or communication device, causes said device to carry out the above-described methods.

There is also provided a communication device or other electronic device adapted to carry out the above-described methods. In particular, there is also provided a communication device comprising a display interface; a communications subsystem; and a processor in communication with said communications subsystem and display interface, the processor being configured to: display, using the display interface, content of an ad unit received via the communications subsystem in a first display screen associated with a first application executing on the communication device, the ad unit comprising the content and associated metadata, and in response to actuation of the ad unit at the communication device, determine a plurality of communication device functions available in association with the ad unit, the plurality of communication device functions being determined by the associated metadata of the ad unit and communication device context information, and display the content of the ad unit in a further display screen comprising graphical user interface elements corresponding to the plurality of communication device functions thus determined.

In one aspect, the processor is configured to determine the plurality of communication device functions by applying one or more context rules to the communication device context information, each of the one or more context rules defining an availability of a communication device function dependent on the communication device context information.

In a further aspect, the processor is further configured to retrieve the communication device context information in response to the actuation of the ad unit.

In another aspect, the processor is further configured to display the content of the ad unit in the further display screen by visually distinguishing one of the graphical user interface elements in the further display screen dependent on capture rate information for said graphical user interface element.

In further aspects of any of the above embodiments, the further display screen comprises an overlay over the first display screen; the one or more context rules are comprised in the ad unit, and/or the one or more context rules are default context rules stored at the communication device; the communication device context information is selected from the group of: a sound or alert profile, battery status, available wireless connections, current geographic location, time of day, whether the communication device is roaming, calendar schedule information, and vicinity of social networking friends; the communication device functions are selected from the group of: message applications, calendar applications, web browser applications, social networking applications, phone applications, and geocoding applications; the plurality of communication device functions corresponding to the graphical user interface elements is a subset of any available communication functions available at the device; and/or the ad unit is a graphics file.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A method of providing graphical user interface access to communication device functions, the method comprising:
displaying content of an ad unit received at a communication device in a first display screen associated with a first application executing on the communication device, the ad unit comprising the content and associated metadata;
in response to actuation of the ad unit at the communication device,
determining a plurality of communication device functions available in association with the ad unit, the plurality of communication device functions being determined by the associated metadata of the ad unit and communication device context information; and
displaying the content of the ad unit in a further display screen comprising graphical user interface elements corresponding to the plurality of communication device functions thus determined.

2. The method of claim 1, wherein the further display screen comprises an overlay over the first display screen.

3. The method of either claim 1 or 2, wherein determining the plurality of communication device functions comprises determining that a communication device function is available if corresponding metadata for said communication device function is comprised in the ad unit.

4. The method of any one of the preceding claims, wherein determining the plurality of communication device functions comprises applying one or more context rules to the communication device context information, each of the one or more context rules defining an availability of a communication device function dependent on the communication device context information.

5. The method of claim 4, wherein the one or more context rules are comprised in the ad unit.

6. The method of claim 4, wherein the one or more context rules are default context rules stored at the communication device.

7. The method of any one of the preceding claims, further comprising retrieving the communication device context information in response to the actuation of the ad unit.

8. The method of any one of the preceding claims, wherein displaying the content of the ad unit in the further display screen comprises displaying the graphical user interface elements in an order determined by the associated metadata.

9. The method of any one of the preceding claims, wherein displaying the content of the ad unit in the further display screen comprises visually distinguishing one of the graphical user interface elements in the further display screen dependent on capture rate information for said graphical user interface element.

10. The method of any one of the preceding claims, wherein the communication device context information is selected from the group of: a sound or alert profile, battery status, available wireless connections, current geographic location, time of day, whether the communication device is roaming, calendar schedule information, and vicinity of social networking friends.

11. The method of any one of the preceding claims, wherein the communication device functions are selected from the group of: message applications, calendar applications, web browser applications, social networking applications, phone applications, and geocoding applications.

12. The method of claim 11, wherein the plurality of communication device functions corresponding to the graphical user interface elements is a subset of any available communication functions available at the device.

13. The method of any one of the preceding claims, wherein the ad unit is a graphics file.

14. A mobile device adapted to carry out the method of any one of claims 1 to 13.

15. A computer program code medium comprising code adapted to cause a computing device executing said code to carry out the method of any one of claims 1 to 13.
